# EUROPEAN PATENT APPLICATION

(11) **EP 4 230 413 A1**
(43) Date of publication of application: **23.08.2023**
(21) Application number: 22157562.4
(22) Date of filing: 18.02.2022
(51) Int. Cl.: B32B 41/00, B32B 38/18, B29C 63/02, G06F 1/16

(54) **SEMI-AUTOMATIC MACHINE FOR APPLYING PROTECTIVE FOILS ONTO DISPLAYS OF ELECTRONIC DEVICES AND THE METHOD OF APPLYING PROTECTIVE FOILS USING A SEMI-AUTOMATIC MACHINE**

(71) Applicant: Lamel Technology Spolka z o.o., 66-400 Gorzow Wielkopolski (PL)
(72) Inventor: Babirecki, Wojciech, 65-115 Zielona Góra (PL); Leszczynski, Mariusz, 66-400 Wawrów (PL); Gramza, Piotr, 66-431 Czechów (PL); Kozlowski, Piotr, 66-400 Gorzów Wielkopolski (PL)
(74) Representative: Zielinski, Wojciech Leszek

(57) **Abstract**

A semi-automatic device for applying protective foils onto displays of electronic devices, characterized in that it consists of holder (2) for an electronic device (1) adapting to dimensions of the electronic device (1) in the form of a flat cuboid without an upper wall, with the side walls (3 and 3a) of the longer sides having a runner (4a) for the stabilizing element (4) of the device electronic (1) in the form of a polygon with one side facing the electronic device at an obtuse angle (5) to the side wall of the holder so as to block the corner of the electronic device (1); the holder (2) is adjustable in depth by the mechanism (6) lowering / lifting of the bottom (10) of the holder (2) through the screw (7) moving the wedges (8a, 8b) under the wedges (9a, 9b) fixed under the bottom of the holder (2) which allows to place the display plane of the electronic device (1) levelly with the edges of the side walls (3, 3a) of the holder (2), the catch (11) for a protective foil at one of the short sides of the holder (2) and two carriages: pressing and unrolling.

A method of applying protective foils onto displays with device according to the invention.

## Description

The present invention relates to a semi-automatic machine for applying protective foils onto displays of electronic devices and to the method of applying protective foils using a semi-automatic machine.

Most modern electronic devices have touchscreen displays (screens) that are prone to scratching, cracking, and staining. On the one hand, keeping them in good condition is a problem, and on the other hand, it is important for comfortable use. Therefore, for years, protective covers stuck to the display have been widely used to protect the display against scratches, dirt and cracks. They can also protect against glare, excessive blue radiation or against unintentional viewing of the screen by third parties. Manual, precise application of a display cover is difficult. Poorly applied foil may even worsen the usability of the device due to air bubbles, loose edges collecting dust, etc.

The basic technical issues related to the application of protective foils on displays of electronic devices are the appropriate positioning of the foil in relation to a display, stabilization of a device and the foil (avoiding unwanted movement during persuasion, twisting of the foil during application) as well as the force and uniformity of pressure ensuring the removal of air and proper gluing foil with a display. There are many solutions that propose positioning stabilizers, respectively, protective covers of displays (known e.g. from the description of the patent application P.424686). These are solutions that improve the quality of prompts, but still require some practice and require feeling with the use of human force. More comprehensive solutions are known in the art. For example, Belkin International Inc. in the descriptions of international patent applications WO2015/054692 and WO2018053333 presents, among many embodiments, a device for applying a film with a sliding press carriage. But just like the rest of the solutions, all the work is done by a human being.

Unexpectedly, in the presented solution, a relatively simple solution to the technical problems of foil application was obtained with the human work being limited to a minimum.

A semi-automatic device for applying protective foils onto displays of electronic devices according to the invention characterizes by that it consists of
- holder for an electronic device adapting to dimensions of the electronic device in the form of a flat cuboid without an upper wall. In the side walls of the longer sides there is a runner for the stabilizing element of the device electronic. The element is in the form of a polygon with one side facing the electronic device at an obtuse angle to the side wall of the holder so as to block the corner of the electronic device. The holder is adjustable in depth by the mechanism lowering / lifting of the bottom of the holder through the screw moving the wedges under the wedges fixed under the bottom of the holder. It allows to place the display plane of the electronic device levelly with the edges of the side walls of the holder;
- the catch for a protective foil at one of the short sides of the holder;
- two carriages:
   - a pressing carriage consisting of a metal pressing roller, on which a silicone coating is mounted, to press the foil. The roller at its ends is supported in slide bearings. These bearings are mounted in supports, which in turn can move vertically in order to obtain the appropriate vertical pressure foil to the device. This pressure is applied by four helical cylindrical springs. The bearing supports are connected by a transverse beam. The whole is the pressing carriage that moves along the device, using linear guides. In the lower part of the pressing carriage, to the beam connecting both its supports (under the main plate of the device), a stepper motor is mounted. The motor has a built-in rotary nut inside. The nut causes the motor to move during rotation together with the pressing carriage and the pressing roller , along the trapezoidal thread screw, from one extreme position to another. These positions are determined by the limit switches;
   - and a carriage unrolling the foil on the device having a split unrolling roller. The roller consists of two parts, which are attached to each other by a hinge that allows them to be opened by an angle about 120°. The internal surfaces of both parts have longitudinal grooves with a triangular cross-section, which when folded together constitute a stable fastening of the foil mounted between them. The parts have a snap system preventing them from self-opening after a foil has been applied therebetween. The parts, when folded, functionally form one shaft of a roller, the ends of which are embedded in slide bearings, which are embedded in supports. They are connected to each other by means of a lower beam (under the main board of the device). The whole consists of a film unrolling carriage moving along the device, by means of linear guides, of an unrolling roller consisting of two parts. The roller can be rotated in relation to its axis during the movement of the unrolling carriage along the guides. That rotation is carried out by means of a gear, on both ends of the roller there are gears, cooperating with two toothed bars, fixed to the housing of the device. The carriage, while moving along the axis of the device, rotates the shaft of the divided roller. The unrolling carriage does not have its own drive, and is moved by a pressing roller driven by a stepper motor. To the supports there are attached arms supporting the handle with an apron to help select the appropriate depth for the bottom of the holder;
- a cover protecting the foil from dust during its applying.
Speed of move of the pressing carriage is constant and it is 19-21 mm/s.
Clamping force of the pressing carriage is set up by pressing helical cylindrical springs and ranges from 40 N to 80 N.

Method of applying protective foils onto displays of electronic devices with the semi-automatic device according to the invention characterizes in that an electronic device with the display cleaned up and removed of the remnants of an old protective foil is placed in the holder with the display facing upwards, adjusting the depth of the holder by turning the screw so that after lifting / lowering the bottom of the holder the display surface flush with the edges of the side walls of the holder. The accuracy of that is checked with the holder's apron after it has been lowered down onto the side walls of the long sides of the holder. Then the electronic device is then secured with the stabilizing element in the position for applying the protective foil. The foil prepared for a given model of electronic device according to the developed template is hooked in the catch to the protective foil by threading the catch points into the template holes. The unrolling carriage is moved against the pressing carriage. Then the layer securing the glue is peeled off from the protective foil near the holes in the template. The peeled free edge of the release liner is placed between the parts of the unrolling roller, and after the protective liner is clamped with the parts the snap system is closed to prevent it from being released. The free edge of the foil is rolled up over the unrolling roller of the unrolling carriage. If necessary, the clamping force of the pressing roller (13) of the pressing carriage is selected by adjusting it with four helical cylindrical springs. The display surface of the electronic device is cleaned again of fine dirt and the protective cover is closed. Next, the drive of the pressing carriage is started and both carriages and rollers are set in motion, which, by moving the foil on the display, and the pressure roller ensures uniform sticking on the entire surface of the display. After sticking on the entire display of the electronic device, the pressure roller returns to its original position pressing the glued protective foil once more. After sticking, one removes the electronic device, remove the supporting layers of the protective film.

The device and the method automate to some extent the activities related to the application of protective foils on displays. First of all, they allow for the standardization of this process, which gives the effect of well-placed protective foils, regardless of the skill and strength of an operator.

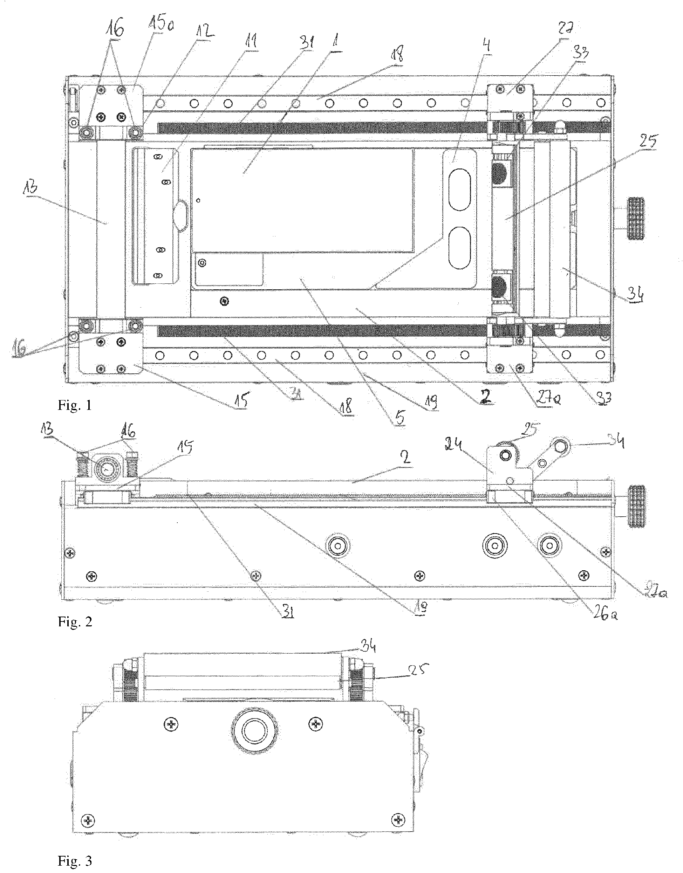

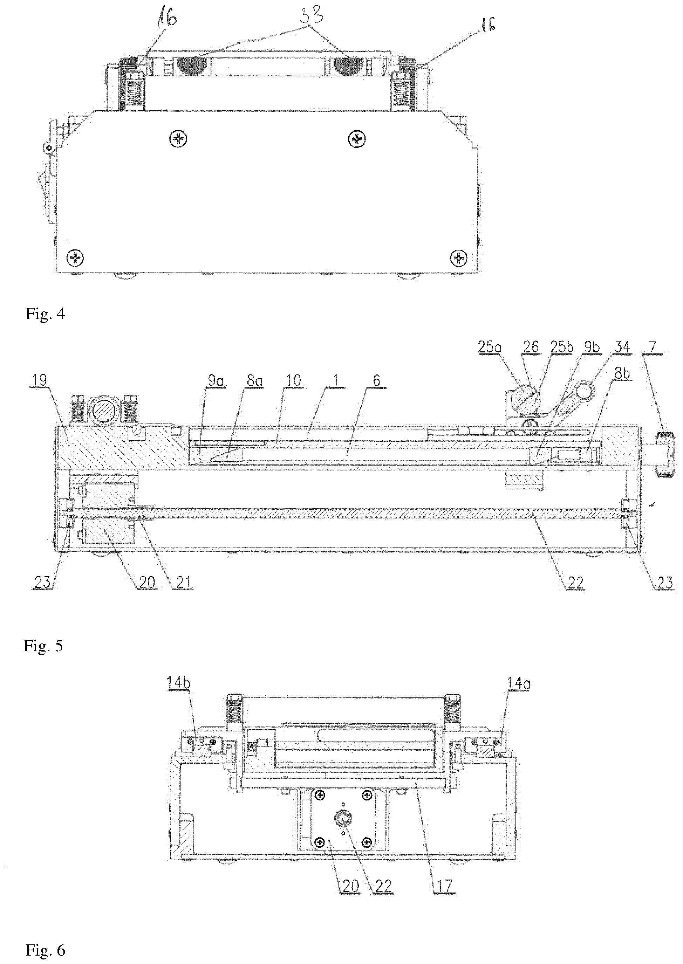

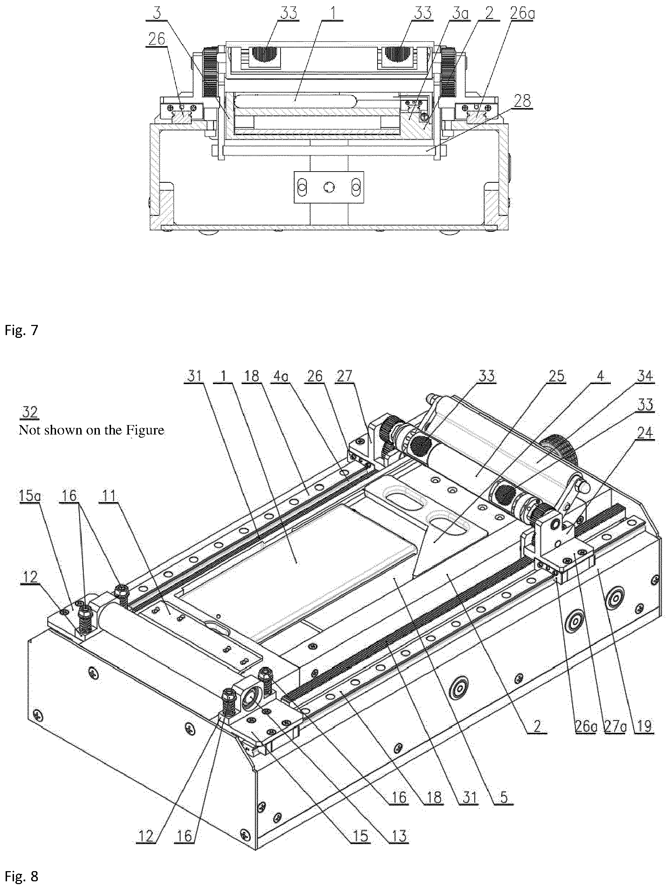

The subject of the invention is presented in exemplary embodiments in drawings on which Fig. 1 shows the devices in a top view, Fig. 2 - in front view, Fig. 3 - in left side view, Fig. 4-right side view, Fig. 5 - section alongside the long axis, Fig. 6 - cross-section of right side view, Fig. 7 - cross-section of left side view and Fig. 8 - perspective view of whole device. On the drawings there is shown holder 2 for an electronic device 1 adapting to dimensions of the electronic device 1 in the form of a flat cuboid without an upper wall. In the side walls 3 and 3a of the longer sides having a runner 4a for the stabilizing element 4 of the device electronic 1. It is in the form of a polygon with one side facing the electronic device at an obtuse angle 5 to the side wall of the holder so as to block the corner of the electronic device 1. The holder 2 is adjustable in depth by the mechanism 6 lowering / lifting of the bottom 10 of the holder 2 through the screw 7 moving the wedges 8a, 8b under the wedges 9a, 9b fixed under the bottom of the holder 2. It allows to place the display plane of the electronic device 1 levelly with the edges of the side walls 3, 3a of the holder 2. There is a catch 11 for a protective foil at one of the short sides of the holder 2. There are shown two carriages. A pressing carriage 12 consisting of a metal pressing roller 13 on which a silicone coating is mounted to press the foil. The roller 13 at its ends is supported in slide bearings 14a, 14b. These bearings 14a, 14b are mounted in supports 15, 15a. They can move vertically in order to obtain the appropriate vertical pressure foil to the device 1. The pressure is applied by four helical cylindrical springs 16. The bearing supports 15, 15a are connected by a transverse beam 17. The whole is the pressing carriage 12 that moves along the device, using linear guides 18. In the lower part of the pressing carriage 12, to the beam 17 connecting both its supports 15, 15a (under the main plate of the device 19), a stepper motor 20 is mounted. The motor 20 has a built-in rotary nut 21 inside. The nut 21 causes the motor to move during rotation 20 together with the pressing carriage 12 and the pressing roller 13, along the trapezoidal thread screw 22, from one extreme position to another. These positions are determined by the limit switches 23. The other carriage 24 unrolling the foil on the device 1 have a split unrolling roller 25. The roller 25 consists of two parts 25a and 25b, which are attached to each other by a hinge that allows them to be opened by an angle about 120°. The internal surfaces of both parts 25a and 25b have longitudinal grooves 26 with a triangular cross-section, which when folded together constitute a stable fastening of the foil mounted between them. The parts 25a and 25b have a snap system 33 preventing them from self-opening after a foil has been applied therebetween. The parts 25a and 25b, when folded, functionally form one shaft of a roller 25, the ends of which are embedded in slide bearings 26, 26a, which are embedded in supports 27, 27a. The supports 27, 27a are connected to each other by means of a lower beam 28 (under the main board of the device 19). The whole consists of a film unrolling carriage 24 moving along the device, by means of linear guides 18, of an unrolling roller 25, The roller 25 consists of two parts 25a and 25b, which can be rotated in relation to its axis during the movement of the unrolling carriage 24 along the guides 18. That rotation is carried out by means of a gear. On both ends of the roller 25 there are gears 29, cooperating with two toothed bars 31, fixed to the housing of the device. The carriage 24, while moving along the axis of the device, rotates the shaft of the divided roller 25. The unrolling carriage 24 does not have its own drive, and is moved by a pressing roller 13 driven by a stepper motor 20. To the supports 27, 27a there are attached arms supporting the handle 34 with an apron to help select the appropriate depth for the bottom 10 of the holder 2. The whole is covered by a cover 32 protecting from dust during the foil application. The speed of move of the pressing carriage 12 is constant and it is 19-21 mm/s. The clamping force of the pressing carriage 12 is set up by pressing helical cylindrical springs 16 and ranges from 40 N to 80 N.

Method of applying protective foils onto displays of electronic devices with the semi-automatic device consists in that an electronic device 1 with the display cleaned up and removed of the remnants of an old protective foil is placed in the holder 2 with the display facing upwards, adjusting the depth of the holder 2 by turning the screw 7 so that after lifting / lowering the bottom of the holder 2 the display surface flush with the edges of the side walls of the holder 2. It is checked with the holder's apron 34 after it has been lowered down onto the side walls 3 and 3a of the long sides of the holder 2. The electronic device 1 is then secured with the stabilizing element 4 in the position for applying the protective foil. The foil prepared for a given model of electronic device 1 according to the developed template is hooked in the catch 11 to the protective foil by threading the catch points 11 into the template holes. The unrolling carriage 24 is moved against the pressing carriage 12. Then the layer securing the glue is peeled off from the protective foil near the holes in the template. The peeled free edge of the release liner is placed between the parts 25a and 25b of the unrolling roller 25. After the protective liner is clamped with the parts 25a and 25b the snap system 33 is closed to prevent it from being released. The free edge of the foil is rolled up over the unrolling roller 25 of the unrolling carriage 24. If necessary, the clamping force of the pressing roller 13 of the pressing carriage 12 is selected by adjusting it with four helical cylindrical springs 16. The display surface of the electronic device is cleaned again of fine dirt and the protective cover 32 is closed. Next the drive of the pressing carriage 12 is started and both carriages 12 and 24 and rollers 13 and 25 are set in motion, which, by moving the foil on the display, and the pressure roller 13 ensures uniform sticking on the entire surface of the display. After sticking on the entire display of the electronic device 1, the pressure roller 13 returns to its original position pressing the glued protective foil once more. After sticking, remove the electronic device 1, remove the supporting layers of the protective film.

## Claims

1. A semi-automatic device for applying protective foils onto displays of electronic devices, **characterized in that** it consists of
- holder (2) for an electronic device (1) adapting to dimensions of the electronic device (1) in the form of a flat cuboid without an upper wall, with the side walls (3 and 3a) of the longer sides having a runner (4a) for the stabilizing element (4) of the device electronic (1) in the form of a polygon with one side facing the electronic device at an obtuse angle (5) to the side wall of the holder so as to block the corner of the electronic device (1);
the holder (2) is adjustable in depth by the mechanism (6) lowering / lifting of the bottom (10) of the holder (2) through the screw (7) moving the wedges (8a, 8b) under the wedges (9a, 9b) fixed under the bottom of the holder (2) which allows to place the display plane of the electronic device (1) levelly with the edges of the side walls (3, 3a) of the holder (2),
- the catch (11) for a protective foil at one of the short sides of the holder (2),
- two carriages:
- a pressing carriage (12) consisting of a metal pressing roller (13) on which a silicone coating is mounted to press the foil; the roller (13) at its ends is supported in slide bearings (14a, 14b), these bearings (14a, 14b) are mounted in supports (15, 15a), which in turn can move vertically in order to obtain the appropriate vertical pressure foil to the device (1), this pressure is applied by four helical cylindrical springs (16); the bearing supports (15, 15a) are connected by a transverse beam (17), the whole is the pressing carriage (12) that moves along the device, using linear guides (18), in the lower part of the pressing carriage (12), to the beam (17) connecting both its supports (15, 15a) (under the main plate of the device (19)), a stepper motor (20) is mounted, the motor (20) has a built-in rotary nut (21) inside, this nut (21) causes the motor to move during rotation (20) together with the pressing carriage (12) and the pressing roller (13), along the trapezoidal thread screw (22), from one extreme position to another, these positions are determined by the limit switches (23);
and a carriage (24) unrolling the foil on the device (1) having a split unrolling roller (25),
which in turn consists of two parts (25a and 25b), which are attached to each other by a hinge that allows them to be opened by an angle about 120°, the internal surfaces of both parts (25a and 25b) have longitudinal grooves (26) with a triangular cross-section, which when folded together constitute a stable fastening of the foil mounted between them; the parts (25a and 25b) have a snap system (33) preventing them from self-opening after a foil has been applied therebetween; parts (25a and 25b), when folded, functionally form one shaft of a roller (25), the ends of which are embedded in slide bearings (26, 26a), which are embedded in supports (27, 27a), which are connected to each other by means of a lower beam (28) (under the main board of the device (19)); the whole consists of a film unrolling carriage (24) moving along the device, by means of linear guides (18), of an unrolling roller (25), consisting of two parts (25a and 25b), which can be rotated in relation to its axis during the movement of the unrolling carriage (24) along the guides (18), this rotation is carried out by means of a gear, on both ends of the roller (25) there are gears (29), cooperating with two toothed bars (31), fixed to the housing of the device, the carriage (24), while moving along the axis of the device, rotates the shaft of the divided roller (25); the unrolling carriage (24) does not have its own drive, and is moved by a pressing roller (13) driven by a stepper motor (20);
to the supports (27, 27a) there are attached arms supporting the handle (34) with an apron to help select the appropriate depth for the bottom (10) of the holder (2);
- a cover (32) protecting the foil from dust during its applying.

2. A semi-automatic device for applying protective foils onto displays of electronic devices according to the Claim 1 **characterized in that** speed of move of the pressing carriage (12) is constant and it is 19-21 mm/s.

3. A semi-automatic device for applying protective foils onto displays of electronic devices according to the Claim 1 **characterized in that** clamping force of the pressing carriage (12) is set up by pressing helical cylindrical springs (16) and ranges from 40 N to 80 N.

4. Method of applying protective foils onto displays of electronic devices with the semi-automatic device according to the Claim 1 **characterizes in that**
- an electronic device (1) with the display cleaned up and removed of the remnants of an old protective foil is placed in the holder (2) with the display facing upwards, adjusting the depth of the holder (2) by turning the screw (7) so that after lifting / lowering the bottom of the holder (2) the display surface flush with the edges of the side walls of the holder (2), which is checked with the holder's apron (34) after it has been lowered down onto the side walls (3 and 3a) of the long sides of the holder (2);
- the electronic device (1) is then secured with the stabilizing element (4) in the position for applying the protective foil;
- the foil prepared for a given model of electronic device (1) according to the developed template is hooked in the catch (11) to the protective foil by threading the catch points (11) into the template holes;
- the unrolling carriage (24) is moved against the pressing carriage (12);
- then the layer securing the glue is peeled off from the protective foil near the holes in the template; the peeled free edge of the release liner is placed between the parts (25a and 25b) of the unrolling roller (25), and after the protective liner is clamped with the parts (25a and 25b) the snap system (33) is closed to prevent it from being released;
- the free edge of the foil is rolled up over the unrolling roller (25) of the unrolling carriage (24);
- if necessary, the clamping force of the pressing roller (13) of the pressing carriage (12) is selected by adjusting it with four helical cylindrical springs (16);
- the display surface of the electronic device is cleaned again of fine dirt and the protective cover (32) is closed; next
- the drive of the pressing carriage (12) is started and both carriages (12 and 24) and rollers (13 and 25) are set in motion, which, by moving the foil on the display, and the pressure roller (13) ensures uniform sticking on the entire surface of the display;
- after sticking on the entire display of the electronic device (1), the pressure roller (13) returns to its original position pressing the glued protective foil once more;
- after sticking, remove the electronic device (1), remove the supporting layers of the protective film.
